# EUROPÄISCHE PATENTANMELDUNG

(11) **EP 1 288 587 A2**
(43) Veröffentlichungstag der Anmeldung: **05.03.2003**
(21) Anmeldenummer: 02090247.4
(22) Anmeldetag: 12.07.2002
(51) Int. Cl.: F24H 3/00, F24H 3/04

(54) **Heizkörpereinheit**

(30) Priorität: 04.09.2001 DE 20114576 U
(71) Anmelder: KERMI GmbH, 94447 Plattling (DE)
(72) Erfinder: Lübbe, Rainer, 88138 Weissenberg (DE)
(74) Vertreter: Köckeritz, Günter

(57) **Zusammenfassung**

Heizkörpereinheit bestehend aus einem Radiator und einem Konvektor, wobei der Radiator aus mehreren, übereinander angeordneten, waagerechten Rohren besteht, die mit den Enden zu beiden Seiten an senkrechte Rohre angeschlossen sind und der Konvektor einen Ventilator und ein elektrisches Heizregister umfasst, wobei die elektrischen Widerstände das Heizregister (10) aus Widerständen mit ausgeprägtem positivem Temperaturkoeffizienten mit einem um ca. 200 % erhöhbaren Widerstandswert bezogen auf den Nennwert bestehen.

## Beschreibung

Die Erfindung betrifft eine Heizkörpereinheit, die aus einem Radiator, einem Konvektor und mindestens einem Träger für zu trocknende Gegenstände besteht, wobei der Radiator aus mehreren, übereinander angeordneten, waagerechten Rohren besteht, die mit den Enden zu beiden Seiten an senkrechte Rohre angeschlossen sind und der Konvektor einen Ventilator und einen elektrischen Heizleiter umfasst.
Die Heizkörpereinheit ist insbesondere für die Anordnung in einem Badezimmer und zum Trocknen von Handtüchern oder dergleichen geeignet.
Heizeinheiten mit Handtuchtrocknern sind bekannt und haben zwei Betriebszustände: mit Handtuch und ohne Handtuch. Physikalisch bedeutet dies, dass sich bei konstanter zugeführter Wärmeenergie die Oberflächentemperaturen des Handtuchtrockners stark unterscheiden. Dieses Verhalten ist bei handelsüblichen Geräten unabhängig von der Konstruktion. In ungünstigen Betriebszuständen kann diese Eigenschaft ein Brandrisiko darstellen. Die einschlägigen Produktnormen schreiben daher zwingend Sicherheitstemperaturbegrenzer vor. Diese Temperaturbegrenzer sind allerdings nur ein Sicherheitsbauteil und ändern prinzipiell nichts an dem technischen Problem der Auslegung eines derartigen Systems. Die bekannten Systeme arbeiten alle nach dem gleichen technischen Prinzip:
- eine konstante elektrische Leistung wird vom Benutzer über Bedienelemente eingestellt,
- ein Verdecken der beheizten Flächen mit einem Handtuch bewirkt häufig das Auslösen des Schutztemperaturbegrenzers, der damit praktisch auch als Temperaturbegrenzer im Handtuchtrocknerbetrieb arbeitet.

Das genannte Übertemperaturproblem versuchen alle Systeme durch mehr oder weniger raffinierte mechanische Konstruktionen zu kompensieren, meist nicht sonderlich erfolgreich, was die Marktverbreitung derartiger Systeme zeigt. Auch bei Zulassungen und Zertifizierungen wird das oben beschriebene Verhalten als Problem angesehen. Bekannte technische Lösungen dafür haben also einen Temperaturbegrenzer und einen Schutztemperaturbegrenzer ( zwei Bauteile mit der gleichen Funktion).

Aus der DE 299 03 817 U1 ist bereits eine Einheit, bestehend aus einem Radiator und einem Konvektor mit elektrischen Heizelementen, bekannt, wobei der Radiator wenigstens zum Teil den mit elektrischen Widerständen arbeitenden Konvektor umschließt. Der Radiator ist mit rohrförmigen, horizontalen Heizelementen versehen, auf welchen Servietten (Handtücher) angeordnet werden können.
Im Luftauslassbereich des Konvektors sind ausdrücklich keine Rohre des Radiators vorgesehen, um den Austritt der Luft aus dem Gitter nicht zu behindern.
Aus der EP 0 568 464 B1 ist ein Heizgerät, insbesondere ein Handtuchtrockner mit elektrischer Heizleitung, bekannt. Am unteren Teil des Heizkörpers ist ein Ventilationsmittel und ein zusätzliches Heizmittel vorgesehen, welches einen Luftstrom abgibt, der wenigstens teilweise entlang der Fläche der vorderen Tafel der Heizvorrichtung aufsteigt. Die Trägerstangen für die zu trocknenden Gegenstände sind entgegengesetzt am oberen Teil des Heizgerätes angeordnet.

In den oben genannten Druckschriften werden keine Angaben dazu gemacht, wie Übertemperaturprobleme gelöst werden sollen. Diese Heizeinheiten mit Handtuchtrocknern sind zudem nicht dafür ausgelegt, dass der Luftauslassbereich des Konvektors mit den zu trocknenden Gegenständen verdeckt wird.

Die Aufgabe der vorliegenden Erfindung besteht darin bekannte Heizkörpereinheiten, bestehend aus Radiator und Konvektor, zu verbessern. Insbesondere soll eine Lösung für eine Heizkörpereinheit vorgestellt werden, bei der das Heizregister des Konvektors bei Drosselung der Wärmeabfuhr nicht überhitzt werden kann.

Erfindungsgemäß wird diese Aufgabe durch die Merkmale des Anspruchs 1 gelöst. Vorteilhafte Ausbildungen der Erfindung sind in den Ansprüchen 2 bis 9 enthalten. Demnach besteht die Heizkörpereinheit aus einem Radiator und einem Konvektor, wobei der Konvektor einen Ventilator und ein elektrisches Heizregister umfasst. Die elektrischen Widerstände des Heizregisters bestehen aus Widerständen mit ausgeprägten positiven Temperaturkoeffizienten, mit einem um ca. 200% erhöhbaren Widerstandswert bezogen auf den Nennwert.

Nach einem bevorzugten Merkmal der Erfindung ist mindestens ein Träger für zu trocknende Gegenstände vorgesehen, der derart angeordnet ist, dass sich die zu trocknenden Gegenstände im Bereich des Luftauslassbereiches des Konvektors befinden. Wenn die zu trocknenden Gegenstände in diesem Bereich angeordnet werden, bedeutet das, dass sich der Widerstandswert der elektrischen Widerstände des Heizregisters nach dem Einschalten stark erhöht. Der vom Ventilator erzeugte Luftstrom wird nach einem weiteren Merkmal vom Heizregister erwärmt. Die zu trocknenden Gegenstände sind unmittelbar vor dem Luftauslassbereich des Konvektors angeordnet.
Dies bedeutet, dass bei steigender Temperatur der elektrische Widerstand des Heizregisters steigt und damit die abgegebene Leistung sinkt. Die Wärmeabfuhr des Konvektors ist dabei durch die zu trocknenden Gegenstände drosselbar. Bei einem Handtuchtrockner bedeutet dies, dass man ein derartiges Gerät beziehungsweise das Heizregister so ausgestalten kann, dass ohne weitere Elektronik, Schaltungstechnik oder zusätzliche Konstruktionen keine kritischen Oberflächentemperaturen/Auslasstemperaturen beim Abdecken mit einem Handtuch oder ähnlichen Gegenständen auftreten können. Ohne Handtuch arbeitet der Konvektor dann wie ein handelsüblicher Schnelllüfter mit wesentlich höherer Leistung.
Nach einem weiteren Merkmal ist der Luftauslassbereiches des Konvektors variierbar, wobei sowohl der Querschnitt als auch die Austrittsrichtung des Luftauslassbereichs veränderbar sind. Dadurch können verschiedenste Ausführungsvarianten realisiert werden.

Der vorzusehende Sicherheitstemperaturbegrenzer übernimmt dann nur noch seine eigentliche Funktion, nämlich die Sicherheit des Gerätes zu gewährleisten und nicht die Normalzustände zu steuern.

Ein Ausführungsbeispiel der Erfindung ist in den Zeichnungen dargestellt und wird nachfolgend näher beschrieben.

Es zeigen
- Figur 1:: eine Gesamtansicht einer erfindungsgemäßen Heizkörpereinheit mit geschnittener linker, unterer Ecke des senkrechten Verteilerrohres;
- Figur 2:: eine Seitenansicht nach Figur 1 in Schnittdarstellung;
- Figur 3:: eine typische Kennlinie eines "normalen" und eines PTC Heizregisters.

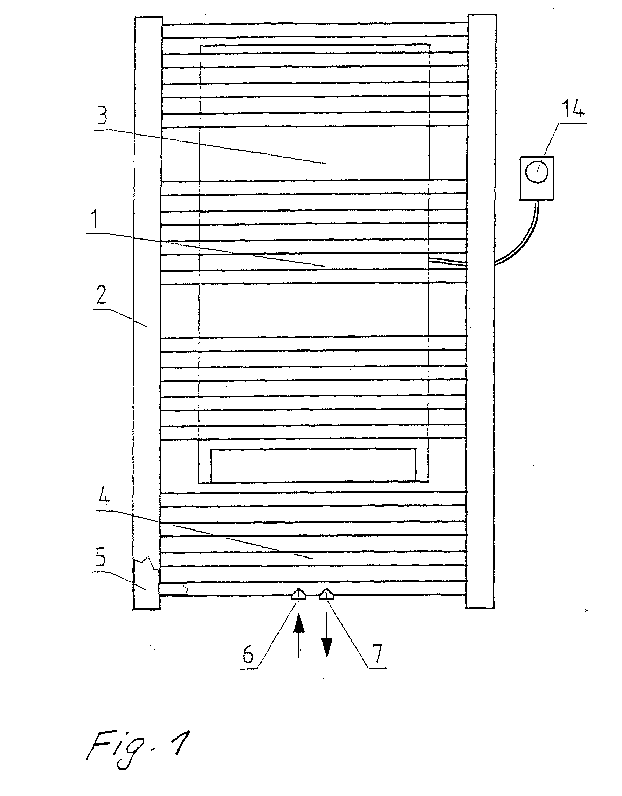

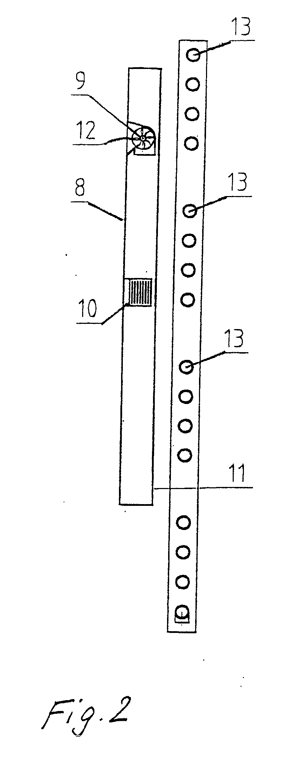

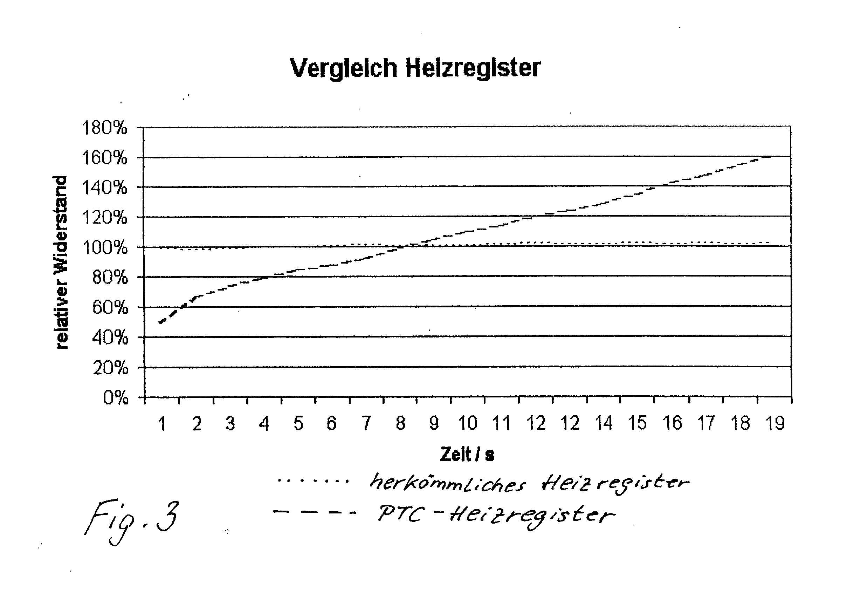

Die Figur 1 zeigt eine Heizkörpereinheit 1 bestehend aus einem Radiator 2 und einem Konvektor 3. In der Figur 2 wird die Heizkörpereinheit mit ihren Bauteilen in Schnittdarstellung gezeigt.
Der Radiator 2 besteht aus mehreren waagerechten Rohren 4, die mit ihren Enden zu beiden Seiten an senkrechten Verteilerrohren 5 angeschlossen sind. Der Radiator 2 wird von einem Heizmedium durchflossen. Am untersten waagerechten Rohr 4x sind der Vor- und der Rücklaufanschluss 6 und 7 angeordnet. Hinter dem Radiator 2 ist in einem Gehäuse 8 der Konvektor 3 angeordnet, der einen Ventilator 9 und ein Heizregister 10 umfasst. Der Konvektor 3 ist mit einem Steuer-, Regel- und Bedienungselement 14 versehen. Auf der Vorderseite des Gehäuses 8 ist ein Luftauslassbereich 11 vorgesehen, welcher dem Ventilator 9 ermöglicht Kaitluft von einer Öffnung 12 des Gehäuses 8 anzusaugen und in den Bereich des Heizregisters 10 zu fördern, wo sie erwärmt wird und schließlich durch den Luftauslassbereich 11 nach außen gelangt. Die Ausrichtung der Öffnung 12 ist dabei nicht nach unten beschränkt.
Als Träger 13 für die zu trocknenden Gegenstände dienen im vorliegenden Fall die waagerechten Rohre 4 des Radiators 2. Die zu trocknenden Gegenstände werden zur Beschleunigung des Trockenvorgangs unmittelbar vor dem Luftauslassbereich 11 des Konvektors aufgehängt.
Im Handtuchtrocknerbetrieb wird der Luftauslassbereich 11 mit einem Handtuch verhangen. Als Träger 13 für das Handtuch dient ein waagerechtes Rohr 4. Die Temperatur am Luftauslassbereich 11 steigt stark an. Die elektrische Leistung des Heizregisters 10 wird durch die PTC-Eigenschaft, das heißt, durch positiven Temperaturkoeffizienten der Widerstände um ca.20 % reduziert. Nach Entfernung des Handtuchs steigt die elektrische Leistung wieder um ca. 20 % an.
Durch das ausgeprägte PTC-Verhalten wird der Widerstandswert des Heizregisters nach dem Einschalten stark erhöht. Die Figur 3 zeigt eine typische Kennlinie eines "normalen" und eines PTC Heizregisters kurz nach dem Einschalten. Das "normale" Heizregister ändert seinen Widerstandswert um ca. 3 % und das Heizregister gemäß der vorliegenden Erfindung um ca. 200 % bezogen auf die Nennwerte.

Der Konvektor 3 ist mit einem nicht dargestellten Sicherheitstemperaturbegrenzer versehen, der die Sicherheit des Gerätes gewährleistet.
Es ist auch möglich, dass im Radiator 2 elektrischen Widerstände angeordnet sind die das Heizmedium erhitzen.

## Patentansprüche

1. Heizkörpereinheit bestehend aus einem Radiator und einem Konvektor, wobei der Radiator aus mehreren, übereinander angeordneten, waagerechten Rohren besteht, die mit den Enden zu beiden Seiten an senkrechte Rohre angeschlossen sind und der Konvektor einen Ventilator und ein elektrisches Heizregister umfasst, **dadurch gekennzeichnet, dass** die elektrischen Widerstände das Heizregister (10) aus Widerständen mit ausgeprägtem positivem Temperaturkoeffizienten mit einem um ca. 200 % erhöhbaren Widerstandswert bezogen auf den Nennwert bestehen.

2. Heizkörpereinheit nach Anspruch 1, **dadurch gekennzeichnet, dass** mindestens ein Träger (13) für zu trocknende Gegenstände vorgesehen ist, der derart angeordnet ist, dass sich die zu trocknenden Gegenstände im Bereich des Luftauslassbereiches (11) des Konvektors (3) befinden.

3. Heizkörpereinheit nach einem der o. g. Ansprüche, **dadurch gekennzeichnet, dass** der vom Ventilator (9) erzeugte Luftstrom vom Heizregister (10) erwärmt wird.

4. Heizkörpereinheit nach einem der o. g. Ansprüche, **dadurch gekennzeichnet, dass** die Wärmeabfuhr des Konvektors (3) durch die zu trocknenden Gegenstände drosselbar ist.

5. Heizkörpereinheit nach einem der o. g. Ansprüche, **dadurch gekennzeichnet, dass** der Konvektor (3) einen Sicherheitstemperaturbegrenzer aufweist.

6. Heizkörpereinheit nach einem der o. g. Ansprüche, **dadurch gekennzeichnet, dass** der Radiator (2) von einem Heizmedium durchflossen wird.

7. Heizkörpereinheit nach einem der o. g. Ansprüche, **dadurch gekennzeichnet, dass** an einem waagerechten Rohr (4) des Radiators Vor- und Rücklaufanschluss (6, 7) für den Heizmediumkreislauf angeordnet sind.

8. Heizkörpereinheit nach einem der o. g. Ansprüche, **dadurch gekennzeichnet, dass** im Radiator (2) elektrische Widerstände angeordnet sind, die das Heizmedium erhitzen.

9. Heizkörpereinheit nach einem der o. g. Ansprüche, **dadurch gekennzeichnet, dass** Radiator (2) und Konvektor (3) voneinander unabhängige Steuer-, Regel- und Bedienungselemente (6, 7, 14) aufweisen.

10. Heizkörpereinheit nach einem der o. g. Ansprüche, **dadurch gekennzeichnet, dass** des Luftauslassbereiches (11) des Konvektors (3) variierbar ist.

11. Heizkörpereinheit nach Anspruch 10, **dadurch gekennzeichnet, dass** sowohl der Querschnitt als auch die Austrittsrichtung des Luftauslassbereichs (11) veränderbar sind.
